# EUROPEAN PATENT APPLICATION

(11) **EP 2 367 354 A1**
(43) Date of publication of application: **21.09.2011**
(21) Application number: 11159052.7
(22) Date of filing: 21.03.2011
(51) Int. Cl.: H04N 7/167, H04N 7/173, H04N 21/4415, H04N 21/258

(54) **Apparatus for the identification certain and safe of the identity of an user in on-line transmission of multimedia content and the like**

(30) Priority: 19.03.2010 IT PD20100088
(71) Applicant: Maritan, Antonio, 35030 Selvazzano Dentro (PD) (IT)
(72) Inventor: Maritan, Antonio, 35030 Selvazzano Dentro (PD) (IT)
(74) Representative: Feltrinelli, Secondo Andrea

(57) **Abstract**

An apparatus for the safe and certain identification of a user's identity in online transmissions of multimedia contents and the like, comprises a web-service platform (40) integrated with a streaming video player (45) and provided with multimedia contents (41), an authentication server (50), a personal computer (20), which serves for the user for using the multimedia contents (41) reserved to him/her, the computer (20) is in communication with the web-service platform (40) and the authentication server (50) through a telecommunication network (30), and a personal token (10), that is, a physical device required for the authentication, the token (10) is connected to the computer (20), and is provided with a device for the biometric recognition of the user; at pseudo-random time intervals, that is, not predetermined, but recurring within a certain maximum time, the web-service platform (40) emits a request (42) for the biometric recognition of the user, and subsequent to a valid biometric recognition, the token (10) outputs a password (21), only valid for a short time, which must be validated by the authentication server (50) for the user to continue using the educational contents (41).

## Description

### TECHNICAL FIELD OF THE INVENTION

The present invention relates to an apparatus for the safe and certain identification of a user's identity in online transmissions of multimedia contents and the like, that is, information and services transmitted remotely over a computer network, for example over the Internet, to a user that is located outside the physical seat of the multimedia content Provider. The present invention is applicable to a wide range of public and private fields, such as: the school educational field, professional training, and all those fields that require a permanent or occasional education.

### PRIOR ART

The increasing and general use of telecommunication networks, in particular the Internet, for transmitting multimedia contents that are strictly personal, and in particular for developing the so-called education and/or study supply chains, that is, the set of bodies that contribute to education, which adopt the method of remote content use, has created the problem of identifying the users that interact through telecommunications with the circuits for the regulated spread of information and knowledge.

For example, in the case of remote education, an educational qualification or other similar qualification is to be obtained to use in the professional and work field at different levels. The problem that often occurs and that sometimes could invalidate the use of the remote methods, is that of identifying the user that is about to start an online session for accessing remote contents and services, that is, out of the physical seat of the content Provider. Within the scope of study and/or education, the problem of a safe and certain identification of the user, that is, characterised by the reasonable certainty of the online identification of a predetermined user, becomes essential, as in the case of masters and training classes that do not necessarily prelude to a profit examination and that may be used online, with undoubted advantages for both the user and the content provider, if they resulted in the acquisition of education credits, recognised as useful for the professional qualification and for the vertical and horizontal progression in the work field.

For example, systems for a user identification, within a transmission of remote training and education contents, are described in U.S. patent US-6 615 020 and in the international patent application WO-2005/069252.

However, these systems are unable to safely ensure the user identification, as they exhibit features that could be bypassed quite easily, allowing the user replacement.

### OBJECTS OF THE INVENTION

An object of the present invention is to improve the prior art.

Another object of the present invention is to propose an apparatus for identifying a user's identity in online transmissions of multimedia contents and the like, which is highly safe and difficult to bypass. Yet another object of the present invention is to propose an apparatus for identifying a user's identity in online transmissions of multimedia contents and the like, which is inexpensive and easy to make. According to an aspect of the present invention, an apparatus is provided according to claim 1.

The dependent claims refer to preferred and advantageous embodiments of the invention.

### BRIEF DESCRIPTION OF THE DRAWING

Further features and advantages of the present invention will appear more clearly from the exemplary description of embodiments of the invention, along with the annexed drawing, wherein:

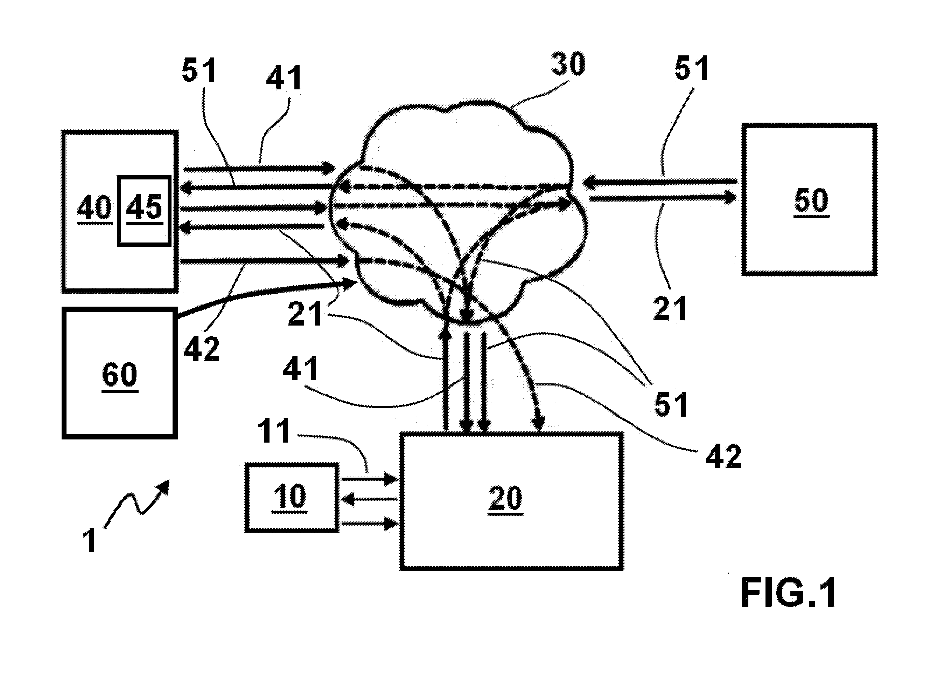

figure 1 shows a block diagram of the apparatus according to the invention.

### DISCLOSURE OF THE INVENTION

With reference to the annexed figure, reference numeral 1 globally indicates the apparatus for the safe and certain identification of a user's identity in online transmissions of multimedia contents and the like, according to the present invention.

Apparatus 1 according to the invention essentially comprises the following components:
a personal token 10, that is, a physical device required by the user for the identification;
a personal computer 20, which the user needs to use the educational contents intended for the user himself/herself, the personal computer 20 is connectable to token 10 for identifying the user according to what described hereinafter;
a telecommunication network 30, for example the Internet, whereto the personal computer 20 must be connected for receiving the educational contents;
a web-service platform 40, which contains the documentation and information material available to the user;
a video streaming reproducer 45 for reproducing the documentation and information material of the web-service platform 40 in streaming mode in computer 20, that is, a video reproducer capable of allowing the use of multimedia contents in a online sequential manner without any local storage in the user's computer 20;
an authentication server 50 connected to the web-service platform 40, either directly or through the telecommunication network 30, and also connected to computer 20 through the telecommunication network 30, such authentication server 50 is required for the user identification as described hereinafter;
a multimedia content manager, or video manager 60, that manages the multimedia contents, such as the input of the multimedia contents to the telecommunication network 30, it further provides a series of services used by the video streaming reproducer 45, which allow the integration and the coordination with the authentication server 50 for the safe verification of the user's credentials.

As an important aspect of the present invention they can be included the user's identification requests on a biometric basis, for example the fingerprint, or the iris, etcetera, associated to the issue - at the beginning and during the transmission of the multimedia contents - of extemporary passwords with a limited time validity (in English, acronym B.OTP-S A = *Biometric One-Time-Password Strong Authentication) .*

The web-service platform 40, which integrates the video streaming reproducer 45, capable of allowing the use of multimedia contents in a online sequential manner without any local storage in the user's personal computer 20, comprises the activation of the management of the extemporary identification requests, in connection with the relevant authentication server 50 of *one-time-passwords* or OTP. The web-service platform 40 is used for managing the process of creation and subscription of a multimedia content and for managing batch activities, that is, non-interactive activities, correlated thereto. All the documentation and information material available to the user is recorded in platform 40, with the exception of the streaming multimedia contents, which are managed by video manager 60 of apparatus 1, according to the description hereinafter.

The video contents are added to the documentation and information material as external resource to the video manager 60, for example through a URL (*Uniform Resource Locator*) Internet address.

The web-service platform 40 communicates through the telecommunication network 30 with the user's personal computer 20, sending contents 41 through the video streaming reproducer 45, said contents being managed by video manager 60.

Video manager 60 manages the access requests to the video contents to be sent to the user.

In order to ensure that the requests only come from registered and authenticated, that is identified, users, an encrypted verification code is used, which is dynamically generated by the web service platform 40 at each display request, and verified by video manager 60 before providing the page through the video streaming reproducer 45 and the streaming video content.

The safety device of video manager 60 is based on the following aspects:
a *passphrase,* that is, a set of alphanumerical words or strings, is stored on the server side, both in video manager 60 and in the web-service platform 40;
the sender, that is, video manager 60, or the web-service platform 40, generates a control code using the indicated *passphrase* and a date-time group (DTG), the result is then coded according to a standardised cryptographic algorithm, for example in MD5;
the recipient, that is, the web-service platform 40, or video manager 60 if the sender was the web-service platform 40, regenerates the code using the above procedure and compares it with the code received from the sender.

If the codes match, the communication between sender and recipient is to be regarded as safe and the sender is certified.

This safety system was made to prevent external malicious entities from interfering with the private communication between one or more players of the platform, that is, between the web-service platform 40 and personal computer 20, since all the information is made available in an optional public context, where for example the telecommunication network 30, as in the case of the Internet, is not controlled.

The video streaming reproducer 45 allows fully controlling the use process of the multimedia contents by the user, ensuring the correct display of the specific content indicated by the user by the web-service platform 40.

The video streaming reproducer 45 therefore becomes the only instrument wherethrough the user can access the multimedia contents in a fully controlled and managed environment.

The video streaming reproducer 45 manages the connection to the web-service platform 40 for reproducing the multimedia contents and managing the user's credential verification required for the use thereof.

The main functions provided are:
video reproduction, pause, return to the beginning, or return based on dynamic video markers added by the user, as described hereinafter, or yet return based on cue points which may be set at the crucial points deemed the most important and/or useful, by the administrator of the multimedia contents when they are posted, controlled progress;
request of the user's credentials in a random mode based on procedures that may be configured for every single display;
insertion of video markers, useful to the user for saving his/her bookmarks on the video, by bookmark it is meant a shortcut to a precise time instant during the reproduction of the multimedia content, the bookmarks allow the user to jump to the desired instant, once the use of the content has been successfully completed;
management of different content display modes, configured through the video manager 60 during the posting. The procedure for calculating the instant to request the user authentication during the video reproduction is as follows. Based on three parameters - control number (numcheck), a random time delay (rndmdelay) and total time (totaltime) of reproduction of the multimedia content - the video streaming reproducer 45 calculates the time instants to request the authentication.

The total reproduction time of the multimedia content (totaltime) is divided by the control number (numcheck), thus obtaining the time instants equally distributed to request the authentication. A random time delay, calculated on the time value interval - rndmdelay, +rndmdelay, is added - or subtracted - to each instant thus calculated.

In this way, purely random time instants are generated which vary at every single display.

The authentication server 50 is dedicated to the user management and validation through a biometric device that can be integrated in token 10.

The authentication server 50 verifies the authenticity of the *one-time-passwords,* or OTP, generated by token 10 with the biometric device for a predetermined user.

Through the OTP generation mechanism, the authentication server 50 performs automatic forward realignments of its counter, up to a maximum of three consecutive numbers.

If the OTP received matches one of them, the authentication is correct and the server is synchronised with token 10, otherwise the authentication fails and the server remains with the misaligned counter.

If the counter misalignment is higher, many OTPs generated by token 10, though never received by the server, a realignment procedure is provided where it is necessary to send the user's *username* and three consecutive OTPs generated by token 10 to the server.

If the verification of the three consecutive OTPs is successful, the authentication server side counter 50 realigns with that on the token side 10.

In any case, a backwards alignment of the counter is not foreseen, otherwise the same passwords may be used multiple times and the fundamental uniqueness feature would be lost.

As regards the biometric device, which is optionally integrated in token 10, in fact, it is a biometric device with an interface for personal computer 20, for example through a USB plug, capable of registering and verifying multiple biometric prints of the user: fingerprint, iris, retinal prints, face profile and shape, voice print, etcetera.

Two steps are mainly managed through such device: a first step for registering the biometric prints - imprinting step - and a subsequent step of verification of the biometric prints. The procedure for registering the biometric prints in the web service platform 40 is managed by a system administrator that is responsible for the management of the biometric devices and for the registration of the respective prints to the users that will receive the biometric device.

The end user will not be able to modify or register new prints in the device received.

The biometric device is the key instrument that allows the system to verify the presence of the physical individual in environments not controlled or not managed by the organisation. The biometric device receives the commands from a dedicated communication program, or *custom browser,* for the authentication verification, and returns "CORRECT AUTHENTICATION" if the biometric print detected by scanning matches one of those encoded in the device, otherwise it returns "WRONG AUTHENTICATION". Along with the verification of the biometric scanning, the device is capable of generating - through a special firmware - that is, from a program directly integrated in the biometric device - or through the *custom browser -* extemporary passwords, that is, *one-time-passwords,* or OTPs, to use with the authentication server 50 for validation.

The extemporary passwords, or OTPs, are generated through two parameters: a constant one, which is used as starting key, a random string, a serial number, etcetera, and a variable one, which may be configured as an incremental counter. Both of these values are unique per single user and are present on both token 10 of the user that generates the OTPs, and on the authentication server 50 that validates them.

Token 10, immediately after having generated an OTP, increases its internal counter and the same operation is performed by the server, once the OTP has been successfully verified.

The *custom browser* is a communication program or *browser* especially designed to manage the communication between token 10 with the biometric device and the web applications through the interpretation of the web page being transmitted, using special attributes and keywords in HTML (Hyper Text Markup Language) format.

In this way, it is possible to make the web application interact with the biometric device, using such *custom browser* as dedicated communication bridge.

The main functions thereof therefore are:
managing the authentication verification requests;
managing the authentication requests with OTP;
automatically inputting sensitive data or the OTP generated on suitably marked text fields;
full browse control, preventing the browsing and the use itself of the custom browser, in the case of wrong verification of the biometric print, or of access to the web-service platform 40 through a foreign browser, that is, different from aforesaid custom browser.

### EXAMPLE OF APPLICATION

By way of an example, let's consider the use of the present solution in the field of professional remote education, which provides for an accredited user to use educational contents through the Internet connection to the web site of the content Provider. To date, this method which is also widespread, could not result in the sufficiently safe assignment to the user of education credits or similar formal and institutional qualifications resulting from the use of these specific contents, only because there could be no reasonable certainty of the actual presence of the person concerned in front of the computer, but optionally only at the beginning of the session. The optional use of personal codes, or PIN (from the acronym: *Personal Identification Number*)*,* to be optionally typed during the session, is useless as they are easily communicated to third parties, which could thus replace the person concerned without the knowledge of the content Provider. A biometric presence check, although made in connection with the user's personal computer, but without the authentication through one *time password*, does not ensure the required certainty of the user's identity, since today it is easily subject to interception and uncontrollable cloning of the data flow between the biometric sensor and the personal computer of the same user.

With apparatus 1 according to the present invention, the problem is solved as follows:
1. once and only once, the content Provider provides the accredited user with the personal token device 10, that is, the physical device required for the authentication, wherein his/her biometric print is impressed in a unique and unchangeable manner, through the initial imprinting function specified above.
   It should be noted that no sensitive data of the user remain stored at the content Provider or on any other site.
2. The user is thus enabled to use the educational contents 41 reserved to the same user, which he/she can do through the online connection to the website of the content Provider, as well as within a physical or virtual private network. Such connection may be activated from a personal computer 20 connected to the telecommunication network 30, to a USB port or in any case a communication port, wherein the user himself/herself will insert his/her token 10.
3. When token 10 is inserted, a special sound/light signal asks the user to put his/her biometric print thereon - optionally after having entered his/her access credentials - login with username and password - according to the desired level of initial authentication. Token 10 and computer 20 being in input and output communication with signal exchange 11.
4. The input of the biometric print is validated by the internal verification software of token 10, which activates the transmission of a suitably encrypted *one-time-password* to the remote authentication server, which in case of validation, enables the use of the multimedia contents, expressly made for operating in functional symbiosis with token 10 and with the special remote education platform - the web-service platform 40 - residing on the website of the content Provider.
5. During the use of the multimedia contents, which takes place in streaming mode, that is, without local content storage to the user's personal computer 20, at pseudo-random time intervals - that is, not predetermined, but recurring within a certain maximum time - a random process generates a suitable request code 42 of a new user identification (reference should also be made to what mentioned above with regards to the generation of pseudo-random time intervals). Such code, which also displays an on-screen invite for the user, is recognised by token 10 always connected to computer 20 which restarts the identification procedure, reference shall be made to the previous item 3.
6. If the recognition takes place within the predetermined limit time, the use continues, otherwise it is managed according to the procedures set for such cause by the content Provider.
   The content Provider may also decide to request the identification to the user, which in any case always takes place with the output of a *one-time-password*, also when the transmission is closed.
7. Thanks to the streaming use method that allows the total traceability of the user's activities for the entire transition, a special user log, that is, a log of the operations performed by the user, is made at the web-service platform 40, which will also contain the information relating to the extemporary identifications.

If these extemporary identifications are regular during the entire use of the contents, the user may be recognised the relevant educational qualifications.

Actually, implementing such procedure, the user cannot considerably leave computer 20, not to taking the risk of not intercepting the extemporary identification requests 42 generated by the platform, and he/she may not be replaced by another person since such requests may only be met subsequent to the affixing of his/her own biometric print, which each time generates different authentication passwords that cannot be foreseen, making any attempts of artificious and fraudulent replacement of the same passwords useless.

In this way, there is a reasonable certainty of the presence of the accredited user, which equalises the use of online educational contents to the physical use, for example in a class, of the same contents and thus also makes the assignment of the relevant remote credit qualifications possible.

It is reasonable to think that the development of the offer of highly customised services provided online and more in particular, of the remote education, is intrinsically dependent on the problem of having a reasonable certainty of the identity of the user connected. In particular, in the educational field, let's consider the importance of the method of using remote contents via the Internet, which implies clear advantages in terms of potentiality of knowledge spreading, customisation of the educational time and reduction of the need of moving the users.

The user especially identified upon the start and during an online transaction may therefore be assigned the formal and institutional qualifications and certifications relating to the services he/she has accessed completely, which in the field of the structured spread of knowledge lead to the assignment of the relevant education credits recognised to the contents used: the apparatus according to the present invention is the solution to this problem. Apparatus 1 according to the present invention exhibits the following peculiarities in the management of an online session:
1. certain and safe authentication of the user's personal access to the contents, by the biometric recognition on fingerprint, or through another type of biometric sensor, along with the output of an extemporary password only valid for a few seconds (*one-time-password* or OTP), so as to make the optional cloning thereof totally useless;
2. use of the same logic for responding to the request signals for a qualified presence that the content Provider may transmit to the user connected online through the special platform, during the use of its services, by the video streaming reproducer 45 - that is, a video reproducer capable of allowing the use of multimedia contents in a sequential online manner without any local storage in the user's personal computer - and in particular of the educational contents; such request may be made in an automatic and recurring manner, based on completely random periods of time, assuming a valid response within a short limit time, this missing, the entire session may be invalidated;
3. possibility for the user to interrupt, if needed, the use of the content transmitted in streaming mode (that is, in a sequential online mode without local storage) by the content Provider through the web-service platform, thus also blocking the output of the requests of qualified presence, which are resumed when the use is reactivated.

In this way, in particular through the combination of the biometric recognition and OTP generation techniques, as well as the specific web-service platform that implements the innovative random and recurring output of the identification requests and of the streaming use method of services and contents, the following significant advantages are obtained:
reasonable certainty of the user's identity both when the online session is opened and during the use of services and contents;
maximum traceability of any activity performed by the user during the online session. In the educational context, such advantages may be a useful element for certifying the apparatus according to the present invention, in order to recognise such procedure as valid for acquiring education credits or other qualifications and elements associated to contents transmitted online in streaming mode, thanks to a safe and certain, that is, "strong", authentication of the user's identity.
It should also be noticed that the same solution may also be adopted in local networks, virtual private and public networks and in any case, in inter-company circuits, also geographically distributed. Finally, the invention described takes into account the recent European orientations in the European Qualification Framework in favour of the mobility, of the learning opportunities and of the European work, which has multiple goals, among which also to favour the customised access of all citizens to higher learning and educational courses, through the recognition and validation of the learning.

## Claims

1. Apparatus for the certain and safe identification of a user's identity in online transmissions of multimedia contents and the like, comprising a web-service platform (40) provided with multimedia contents (41), an authentication server (50), a personal computer (20), which serves for the user for using the contents (41) reserved to him/her, said computer (20) being connected to an telecommunication network (30), for example the Internet, and being in communication through said network (30) with the web-service platform (40) and the authentication server (50), a personal token (10), that is, a physical device required for the authentication, said token (10) being connected to said computer (20), and a device for the biometric recognition of the user connected to said computer (20) for the identification of the user's biometric features, **characterised in that** at pseudo-random time intervals, that is, not predetermined, but recurring within a certain maximum time, the web-service platform (40) emits a request (42) for the biometric recognition of the user, through a video streaming reproducer (45), subsequent to a valid biometric recognition, the token (10) causes the output of a password (21), only valid for a short time, which must be validated by the authentication server (50) so that the user may continue the use of the educational contents (41).

2. Apparatus for the identification according to claim 1, comprising an especially designed communication program or browser, therefore also called custom browser, for managing the communication between said token (10) and the web applications, that is, the educational contents (41) present in the web-service platform (40), through the interpretation of the web page being transmitted, using special attributes and keywords in HTML (Hyper Text Markup Language) format.

3. Apparatus for the identification according to claim 2, wherein said authentication server (50) in case of validation of the password (21), transmits a feedback authentication signal (51) to the web-service platform (40), and enables said custom browser in functional symbiosis with the token (10) and said web-service platform (40), as the online transmission of the multimedia contents and alike starts.

4. Apparatus for the identification according to one of the previous claim, wherein said web-service platform (40) comprises a special and specific streaming video player (45), that is, a video reproducer capable of allowing the use of multimedia contents in a sequential online manner without any local storage on the user side, suitable for sending the educational contents (41) to the computer (20).

5. Apparatus for the identification according to one of the previous claim, wherein said device for the biometric recognition of the user detects the user's fingerprint or uses other types of detection on a biometric basis.

6. Apparatus for the identification according to one of the previous claim, comprising a multimedia content manager, or video manager (60), which manages the multimedia contents, such as the input of the multimedia contents to the telecommunication network (30).

7. Apparatus for the identification according to claim 6, wherein said video manager (60) comprises a safety device capable of generating encrypted codes that are exchanged and verified with the web-service platform (40), so as to prevent external malicious entities from interfering with the private communication between the web-service platform (40) and the personal computer (20) that takes place through the telecommunication network (30).

8. Apparatus for the identification according to one of the previous claim, wherein said token (10) comprises said device for the biometric recognition for identifying the user's biometric features.
